# EUROPÄISCHE PATENTSCHRIFT

(11) **EP 0 742 123 B1**
(45) Veröffentlichungstag und Bekanntmachung des Hinweises auf die Patenterteilung: **03.03.1999**
(21) Anmeldenummer: 96106287.4
(22) Anmeldetag: 22.04.1996
(51) Int. Cl.: B60R 21/20, B60R 13/00, F16B 37/00, F16B 5/04, F16B 37/04, F16B 33/00, F16B 1/00, G09F 7/18

(54) **Methode zur sicheren Befestigung einer Emblem-Plakette an einer Airbag-Deckelplatte in einem Kraftfahrzeug**
Method for a safe fastening of an emblem on an airbag cover in a vehicle
Attache de sécurité d'un emblème sur un couvercle de sac gonflable dans un véhicule

(30) Priorität: 12.05.1995 DE 29507890 U
(43) Veröffentlichungstag der Anmeldung: 13.11.1996
(73) Patentinhaber: TRW Occupant Restraint Systems GmbH & Co. KG, 73551 Alfdorf (DE)
(72) Erfinder: Grout, John, 73553 Alfdorf (DE)
(74) Vertreter: Degwert, Hartmut, Dipl.-Phys.

(56) Entgegenhaltungen:
- DE-U- 8 531 673
- DE-U- 9 402 922
- GB-A- 929 685
- GB-A- 1 181 655
- GB-A- 2 149 041
- US-A- 1 987 215
- US-A- 2 156 003
- US-A- 3 378 972
- US-A- 5 013 174

## Beschreibung

Die Erfindung betrifft eine Gassack-Abdeckung für ein Fahrzeuginsassen-Rückhaltesystem mit einer Deckelplatte, an der eine mit einem Emblem versehene Plakette befestigt ist, wobei die Plakette auf ihrer der Deckelplatte zugewandten Seite wenigstens einen Befestigungsstift aufweist, der die Deckelplatte durchdringt und auf der Rückseite der Deckelplatte mit einer Unterlegscheibe zusammenwirkt, um die Plakette gegen ein Ablösen von der Deckelplatte zu sichern.

Derartige Abdeckungen sind beispielsweise aus dem deutschen Gebrauchsmuster G 94 02 922 bekannt. Der Befestigungsstift ist dabei als Hohlniet ausgebildet, der auf der Rückseite der Deckelplatte umgebördelt ist. Darüber hinaus sind Abdeckungen bekannt, bei denen das Emblem mit der Plakette verklebt und der Befestigungsstift über eine herkömmliche Niet- oder Schraubverbindung befestigt ist.

Bei dieser Art der Emblembefestigung besteht das Problem, daß beim Entfalten des Gassacks infolge eines Unfalls die beim Aufschlag der Abdeckung auf den Lenkradkranz auf die Emblembefestigung einwirkende Energie nur unzureichend abgebaut wird und die auf die Schraub- oder Nietverbindung wirkenden Hebelkräfte zu einem Lösen der Verbindung führen können.

Die vorliegende Erfindung löst dieses Problem dadurch, daß zur Befestigung des Emblems an einer Gassack-Abdeckung der eingangs genannten Art eine Unterlegscheibe verwendet wird, die mit mehreren Ausnehmungen versehen ist.

Vorzugsweise erstrecken sich die Ausnehmungen in der Unterlegscheibe von deren Rand in radialer Richtung nach innen. Die Ausnehmungen können aber auch über die Fläche der Unterlegscheibe verteilt und lochartig ausgebildet sein. Vorzugsweise sind an der Unterseite der Deckelplatte ein oder mehrere Halteelemente vorgesehen, die in die Ausnehmungen eingreifen und so die Unterlegscheibe gegen eine Verschiebung in Richtung der beim Aufspringen der Abdeckung wirkenden Fliehkraft sichern. In vorteilhafter Weise kann die Unterlegscheibe auch ein selbstschneidendes Innengewinde aufweisen, das den Befestigungsstift schneidet. Dieses Innengewinde kann auch in einer an der Unterlegscheibe angeformten Hülse zur Aufnahme des Befestigungsstiftes vorgesehen sein. Bei dieser Art der Emblembefestigung ist es besonders vorteilhaft, wenn die Unterlegscheibe auf der der Deckelplatte zugewandten Seite mehrere Gradschneiden aufweist, die widerhakenförmig in die Deckelplatte eingreifen und die Unterlegscheibe gegen ein Losdrehen sichern.

Die Erfindung wird nun unter Bezugnahme auf die Zeichnung näher erläutert. In der Zeichnung zeigen:
- Fig. 1: eine schematische Perspektivansicht einer Gassack-Abdeckung für ein Fahrzeuginsassen-Rückhaltesystem;
- Fig. 2: eine Schnittansicht durch eine Deckelplatte, an der eine Plakette befestigt ist;
- Fig. 3: eine schematische Darstellung einer erfindungsgemäßen Unterlegscheibe;
- Fig. 4: eine weitere Ausführungsform der erfindungsgemäßen Unterlegscheibe;
- Fig. 5: eine erfindungsgemäße Emblembefestigung;
- Fig. 6: eine erfindungsgemäße Unterlegscheibe mit selbstschneidendem Innengewinde und Gradschneiden;
- Fig. 7: einen Teilquerschnitt entlang der Linie B-B durch die Unterlegscheibe nach Fig. 6; und
- Fig. 8: einen weiteren Querschnitt durch die Unterlegscheibe nach Fig. 6.

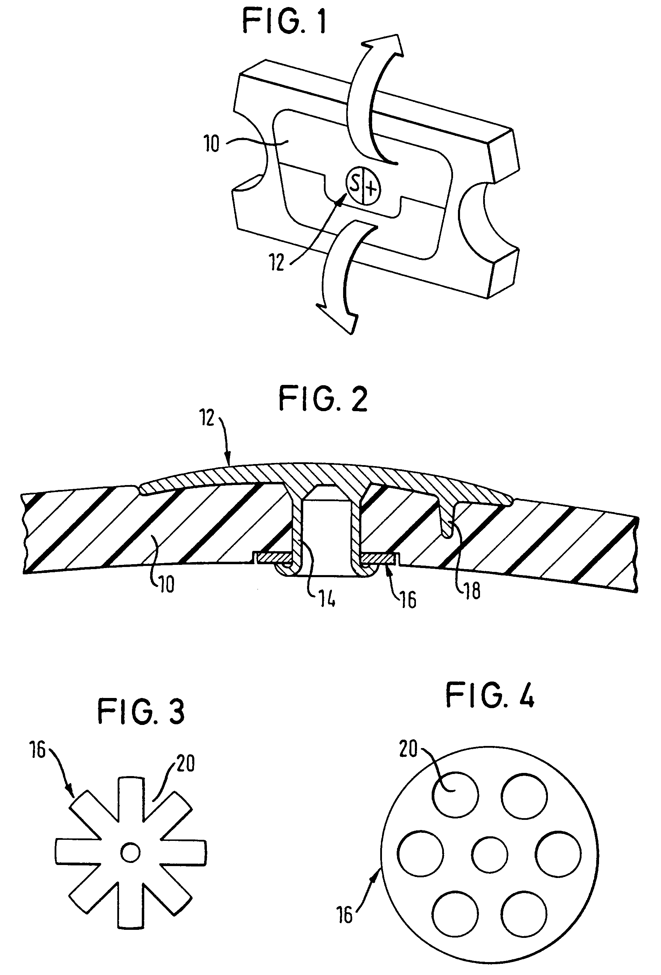

Fig. 1 zeigt beispielhalber eine Abdeckung mit einer Deckelplatte 10 bei einem Fahrzeuginsassen-Rückhaltesystem für die Fahrerseite. Auf der dem Fahrer des Fahrzeugs zugewandten Vorderseite der Deckelplatte 10 ist eine Plakette 12 befestigt, die mit einem Emblem oder einem Logo eines Fahrzeugherstellers versehen ist. Die Pfeile deuten die Öffnungsrichtungen der Deckelplatte an.

Fig. 2 zeigt einen Querschnitt durch die Deckelplatte 10 der Abdeckung und die Plakette 12. Bei der hier gezeigten Ausführungsform ist die Plakette aus einem Metallrohling durch Fließpressen hergestellt und weist auf ihrer Rückseite wenigstens einen angeformten Befestigungsstift 14 auf, der eine Öffnung in der Deckelplatte 10 durchdringt. Der Befestigungsstift ist als Hohlniet ausgebildet und auf der Rückseite der Deckelplatte 10 umgebördelt. Zwischen dem umgebördelten Endabschnitt des Hohlniets und der Rückseite der Deckelplatte 10 ist eine Unterlegscheibe 16 angeordnet. Die Unterlegscheibe gewährleistet eine hohe Haltekraft der Befestigung. Auf ihrer der Deckelplatte 10 zugewandten Rückseite ist die Plakette 12 ferner mit einem angeformten Zapfen 18 versehen, der in eine entsprechende Ausrichtöffnung an der Vorderseite der Deckelplatte eindringt. Mittels dieses Zapfens 18 wird die korrekte Ausrichtung des Emblems auf der Vorderseite der Plakette 12 erzwungen. Je nach Größe und Form der Plakette können auf ihrer Rückseite auch mehrere Zapfen 18 angeformt sein. Anstelle des in Fig. 2 gezeigten Hohlniets kann jede andere Nietart verwendet werden. Der Befestigungsstift 14 kann auch mit einem Gewinde versehen sein und durch eine Schraubverbindung gehalten werden.

Fig. 3 zeigt eine erfindungsgemäße Unterlegscheibe 16, die mit Ausnehmungen 20 versehen ist. Die Ausnehmungen erstrecken sich vom Rand der Unterlegscheibe in radialer Richtung nach innen. Die Unterlegscheibe 16 ist bei der hier gezeigten Ausführungsform sternförmig ausgebildet. Dadurch ist die Unterlegscheibe leicht deformierbar. Die beim Aufschlag der Abdeckung auf den Lenkradkranz des Fahrzeugs auf das hintere Ende des Befestigungsstifts einwirkende Hebelkraft wird verringert und die beim Aufschlag umgesetzte Energie leichter abgebaut.

Fig. 4 zeigt eine weitere Ausführungsform der erfindungsgemäß zu verwendenden Unterlegscheibe 16. Bei dieser Ausführungsform sind die Ausnehmungen 20 über die Fläche der Unterlegscheibe verteilt und als kreisrunde Löcher ausgebildet. Die Form sowie die Anzahl der Ausnehmungen 20 ist jedoch beliebig und richtet sich nach Form und Größe der Unterlegscheibe 16. Die Verteilung der Ausnehmungen 20 über die Fläche der Unterlegscheibe 16 ist vorzugsweise symmetrisch.

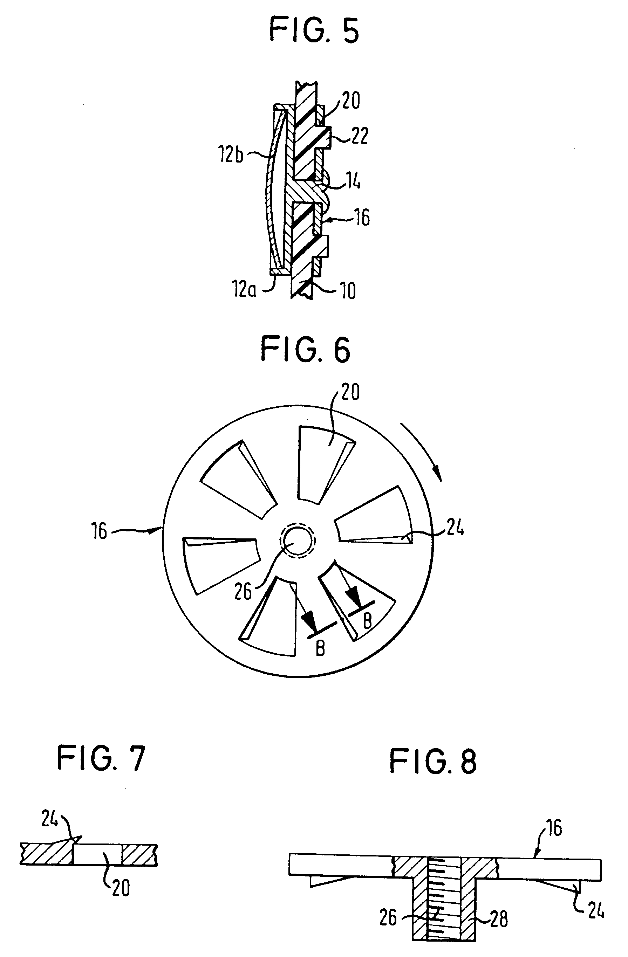

Eine vorteilhafte Weiterbildung der erfindungsgemäßen Abdeckung unter Verwendung der in Fig. 4 gezeigten Unterlegscheibe ist in Fig. 5 dargestellt. Bei dieser Ausführungsform sind auf der Rückseite der Abdeckung 10 eine oder mehrere Halteelemente 22 ausgebildet, die in die Ausnehmungen 20 der Unterlegscheibe 16 eingreifen und so die Unterlegscheibe zusätzlich gegen ein Verrutschen sichern. Die Plakette 12 besteht hier aus einem Träger 12a, an dessen der Deckelplatte 10 zugewandten Seite der Befestigungsstift 14 angeformt ist. Der Träger 12a und der Befestigungsstift 14 sind vorzugsweise aus Aluminium gebildet. Auf der dem Fahrzeuginnenraum zugewandten Seite des Trägers 12a ist ein mit dem Logo eines Fahrzeugherstellers versehenes Emblem 12b aufgeklebt. Die in die Ausnehmungen 20 der Unterlegscheibe 16 eingreifenden Halteelemente 22 verhindern in optimaler Weise ein Verrutschen der Unterlegscheibe. Durch die Ausnehmungen 20 weist die Emblembefestigung insgesamt ein geringeres Gewicht auf.

Bei der in Fig. 6 gezeigten Ausführungsform ist die Unterlegscheibe 16 mit einem selbstschneidenden Innengewinde 26 versehen. Dieses Innengewinde dient zum Schneiden des Befestigungsstiftes, der vorzugsweise aus Aluminium gebildet ist. Durch Drehen in Pfeilrichtung wird die Unterlegscheibe 16 angezogen. Auf der der Rückseite der Deckelplatte 10 zugewandten Seite der Unterlegscheibe 16 sind mehrere Gradschneiden 24 angeordnet. Die Gradschneiden 24 sind vorzugsweise durch Umfalzen eines Randbereichs der Ausnehmungen 20 gebildet.

Fig. 7 zeigt einen Teilquerschnitt durch die erfindungsgemäße Unterlegscheibe 16 entlang der Linie B-B. Die Gradschneiden 24 sind am Rand der Ausnehmungen 20 angeordnet und schräg angestellt, so daß sie in die Kunststoffoberfläche der Deckelplatte 10 eingreifen und ein Lösen der Schraubverbindung zwischen dem Befestigungsstift 14 und der Unterlegscheibe 16 verhindern.

Fig. 8 zeigt schließlich einen weiteren Querschnitt durch die Unterlegscheibe 16 mit Innengewinde 26, bei der das Innengewinde in einer Hülse 28 angeordnet ist. Die Hülse dringt wenigstens teilweise in die Deckelplatte 10 ein und nimmt den Befestigungsstift 14 auf. Durch die vergrößerte Gewindefläche ist ein sicherer Halt der Schraubverbindung zwischen der Unterlegscheibe 16 bzw. der Hülse 28 und dem Befestigungsstift 14 gewährleistet. Die Gradschneiden 24 verhindern auch hier ein Losdrehen der Schraubverbindung. Die Funktion der erfindungsgemäßen Unterlegscheibe 16 ist jedoch auch ohne die Hülse 28 gewährleistet. Diese Ausführungsform ermöglicht eine kontrollierbare Montage der Plakette 12 durch Messung und Einstellung des Drehmoments bei der Emblembefestigung. Die Schraubverbindung gewährleistet insgesamt eine bessere Sicherheit und einen besseren Halt.

## Patentansprüche

1. Gassack-Abdeckung für ein Fahrzeuginsassen-Rückhaltesystem mit einer Deckelplatte (10), an der eine mit einem Emblem versehene Plakette (12) befestigt ist, wobei die Plakette (12) auf ihrer der Deckelplatte zugewandten Seite wenigstens einen Befestigungsstift (14) aufweist, der die Deckelplatte durchdringt und auf der Rückseite der Deckelplatte mit einer Unterlegscheibe (16) zusammenwirkt, um die Plakette gegen ein Ablösen von der Deckelplatte zu sichern, dadurch gekennzeichnet, daß die Unterlegscheibe mit mehreren Ausnehmungen (20) versehen ist.

2. Abdeckung nach Anspruch 1, dadurch gekennzeichnet, daß sich die Ausnehmungen (20) vom Rand der Unterlegscheibe in radialer Richtung nach innen erstrecken.

3. Abdeckung nach Anspruch 1, dadurch gekennzeichnet, daß die Ausnehmungen (20) über die Fläche der Unterlegscheibe verteilt und lochartig ausgebildet sind.

4. Abdeckung nach einem der Ansprüche 1 bis 3, dadurch gekennzeichnet, daß an der Rückseite der Deckelplatte wenigstens ein Halteelement (22) angeordnet ist, das in eine der Ausnehmungen (20) eingreift.

5. Abdeckung nach einem der Ansprüche 1 bis 3, dadurch gekennzeichnet, daß die Unterlegscheibe (16) mit einem selbstschneidenden Innengewinde (26) versehen ist, welches den Befestigungsstift (14) schneidet, und daß auf der der Deckelplatte (10) zugewandten Seite der Unterlegscheibe (16) mehrere Gradschneiden (24) angeordnet sind, die in die Rückseite der Deckelplatte eingreifen und ein Losdrehen der Unterlegscheibe verhindern.

6. Abdeckung nach Anspruch 5, dadurch gekennzeichnet, daß die Unterlegscheibe eine Hülse (28) zur Aufnahme des Befestigungsstiftes (14) aufweist und das selbstschneidende Innengewinde (26) in der Hülse (28) angeordnet ist.

7. Abdeckung nach einem der Ansprüche 1 bis 6, dadurch gekennzeichnet, daß die Plakette (12) wenigstens einen angeformten Zapfen (18) aufweist, der in eine in der Deckelplatte (10) vorgesehene Ausrichtöffnung eindringt.

## Claims

1. A cover for a gas bag of a vehicle occupant restraint system, comprising a cover plate (10) on which a badge (12) bearing an emblem is fixed, the badge (12) having on the side thereof facing the cover plate at least one attachment pin (14) which extends through the cover plate and on the rear side of the cover plate cooperates with a washer (16) in order to prevent detachment of the badge from the cover plate, characterized in that the washer is provided with a plurality of recesses (20).

2. The cover as claimed in claim 1, characterized in that the recesses (20) extend from the edge of the washer in a radial direction inwards.

3. The cover as claimed in claim 1, characterized in that the recesses (20) are distributed over the surface of the washer and are in the form of through holes.

4. The cover as claimed in any one of the claims 1 to 3, characterized in that on the rear side of the cover plate at least one holding element (22) is arranged which engages into one of the recesses (20).

5. The cover as claimed in any one of the claims 1 to 3, characterized in that the washer (16) is provided with a self-tapping internal thread (26) adapted to cut a mating thread in the attachment pin (14) and in that on the side facing the cover plate (10) of the washer (16) a plurality of fin edges (24) are provided which bite into the rear side of the cover plate preventing the washer from turning and becoming loose.

6. The cover as claimed in claim 5, characterized in that the washer comprises a sleeve (28) for receiving the attachment pin (14), and that the self-tapping internal thread (26) is arranged in the sleeve (28).

7. The cover as claimed in any one of the claims 1 to 6, characterized in that the badge (12) has at least one pin (18) formed integrally therewith, which engages into an alignment opening provided in the cover plate (10).

## Revendications

1. Cache de coussin à gaz pour un système de retenue d'occupants d'un véhicule, comprenant une plaque formant couvercle (10) à laquelle est fixée une plaquette (12) munie d'un emblème, la plaquette (12) comportant, sur son côté tourné vers la plaque formant couvercle, au moins une broche de fixation (14) qui traverse la plaque formant couvercle et coopère, sur la face arrière de la plaque formant couvercle, avec une rondelle (16) afin d'empêcher la plaquette de se désolidariser de la plaque formant couvercle, caractérisé en ce que la rondelle est pourvue de plusieurs évidements (20).

2. Cache selon la revendication 1, caractérisé en ce que les évidements (20) s'étendent radialement du bord de la rondelle vers l'intérieur.

3. Cache selon la revendication 1, caractérisé en ce que les évidements (20) sont répartis sur la surface de la rondelle et sont conçus sous la forme de trous.

4. Cache selon l'une des revendications 1 à 3, caractérisé en ce qu'il est prévu, sur la face arrière de la plaque formant couvercle, au moins un élément de retenue (22) qui pénètre dans l'un des évidements (20).

5. Cache selon l'une des revendications 1 à 3, caractérisé en ce que la rondelle (16) est munie d'un filetage intérieur autotaraudeur (26) qui entaille la broche de fixation (14), et en ce que, sur le côté de la rondelle (16) tourné vers la plaque formant couvercle (10), sont disposés plusieurs ergots tranchants (24) qui s'enfoncent dans la face arrière de la plaque formant couvercle et empêchent la rondelle de se desserrer.

6. Cache selon la revendication 5, caractérisé en ce que la rondelle comporte une douille (28) destinée à recevoir la broche de fixation (14), et le filetage intérieur autotaraudeur (26) se trouve dans la douille (28).

7. Cache selon l'une des revendications 1 à 6, caractérisé en ce que la plaquette (12) comporte au moins un téton moulé (18) qui pénètre dans un orifice d'orientation ménagé dans la plaque formant couvercle (10).
